# EUROPÄISCHE PATENTANMELDUNG

(11) **EP 4 675 907 A1**
(43) Veröffentlichungstag der Anmeldung: **07.01.2026**
(21) Anmeldenummer: 25185742.1
(22) Anmeldetag: 27.06.2025
(51) Int. Cl.: H02M 1/32, H02M 7/797, H02M 7/5387, H02M 1/00, B60L 3/00

(54) **SCHALTUNGSANORDNUNG ZUR ANSTEUERUNG EINES WECHSELRICHTERS UND VERFAHREN**

(30) Priorität: 02.07.2024 DE 102024206205
(71) Anmelder: VOLKSWAGEN AKTIENGESELLSCHAFT, 38440 Wolfsburg (DE)
(72) Erfinder: Reinhardt, Jan, 38440 Wolfsburg (DE); Kumari, Priti, 38440 Wolfsburg (DE)

(57) **Zusammenfassung**

Die Erfindung betrifft eine Schaltungsanordnung (10) zur Ansteuerung eines Wechselrichters (3) in einem Hochvoltnetz, wobei der Wechselrichter (3) mit einer Elektromaschine (4) und einer Hochvoltbatterie (2) verbunden ist, wobei die Schaltungsanordnung (10) mindestens einen Mikrocontroller (12), mindestens eine Überwachungsschaltung (11) für den Mikrocontroller (12), mindestens einen Gate-Treiberbaustein (13) für den Wechselrichter (3) und eine redundante Abschalteinrichtung (15) zur Durchführung eines Abschaltvorganges des Wechselrichters (3) aufweist, wobei die Überwachungsschaltung (11) derart ausgebildet ist, mindestens Zustandsdaten (ZD) des mindestens einen Gate-Treiberbausteins (13) und des Wechselrichters (3) zu empfangen, wobei die Überwachungsschaltung (11) derart ausgebildet ist, im Fehlerfall, in dem die Elektromaschine (4) in einen sicheren Zustand überführt werden muss, die Verfügbarkeit des Mikrocontrollers (12), des mindestens einen Gate-Treiberbausteins (13) und des Wechselrichters (3) zu prüfen, ob ein gesteuertes oder geregeltes Überführen der Elektromaschine (4) über den Mikrocontroller (12) möglich ist, wobei, wenn dies nicht möglich ist, der Abschaltvorgang über die redundante Abschalteinrichtung (15) durchgeführt wird und ansonsten der Abschaltvorgang durch den Mikrocontroller (12) eingeleitet wird, wobei die Überwachungsschaltung (11) weiter derart ausgebildet ist, den Abschaltvorgang durch den Mikrocontroller (12) zu überwachen und bei Auftreten eines Fehlers die Abschaltung über die redundante Abschalteinrichtung (15) vorzunehmen, sowie ein Verfahren zur Ansteuerung eines Wechselrichters (3).

## Beschreibung

Die Erfindung betrifft eine Schaltungsanordnung zur Ansteuerung eines Wechselrichters in einem Hochvoltnetz und ein Verfahren zur Ansteuerung des Wechselrichters.

Wechselrichter für elektrische Traktionsantriebe müssen aufgrund der hohen Drehmomente und Leistungen in den von den Wechselrichtern angetriebenen elektrischen Motoren üblicherweise gemäß ISO 26262 entwickelt werden. Die Wechselrichter sind dabei typischerweise Pulswechselrichter.

Gemäß des üblichen Standes der Technik wird die in der ISO 26262 geforderte SicherheitsIntegrität durch ein Mehr-Ebenen-Konzept gewährleistet, indem eine oder mehrere Überwachungsebene bzw. Überwachungsebenen eine oder mehrere sogenannte funktionale Ebenen überwachen. Die Überwachungsebenen gewährleisten dann entweder ganz oder zumindest teilweise die in der ISO 26262 geforderte Sicherheitsintegrität, wodurch die Anforderungen der ISO 26262 an die funktionale Ebene verringert werden.

Die Sicherheitsintegrität des Pulswechselrichters bzw. des elektrischen Antriebs wird letztendlich dadurch gewährleistet, dass der Pulswechselrichter den Antrieb bei Auftreten eines sicherheitskritischen Fehlers bzw. einer sicherheitskritischen Fehlfunktion in einen "sicheren Zustand" versetzt. Der "sichere Zustand" ist dadurch gekennzeichnet, dass vom elektrischen Antrieb keine weitere Gefahr für Fahrzeuginsassen und Dritter ausgeht. Der "sichere Zustand" bedeutet daher immer, dass der Antrieb in geeigneter Weise deaktiviert bzw. abgeschaltet wird, wodurch er seine Fähigkeit verliert, in aktiver Weise ein antreibendes oder rekuperierendes Drehmoment zu erzeugen.

Pulswechselrichter verfügen prinzipiell über zwei verschiedene Weisen, den Antrieb im Sinne eines sicheren Zustandes zu deaktivieren.
1. Deaktivierung des Antriebs durch einen aktiven Kurzschluss.
   Bei der Deaktivierung des Antriebs durch einen aktiven Kurzschluss werden die drei Phasen des Elektromotors durch den Pulswechselrichter kurzgeschlossen.
   In den kurzgeschlossenen Wicklungen können hohe Ströme fließen, es erfolgt jedoch keine Kommutierung der Phasenströme in den Zwischenkreis.
2. Deaktivierung des Antriebs über Freilauf.
   Bei der Deaktivierung des Antriebs durch einen Freilauf werden alle drei Phasen des Elektromotors abgeschaltet. Durch die Abschaltung der Phasen wird der zum Abschaltzeitpunkt fließende Phasenstrom in den Zwischenkreis kommutiert, wodurch er sich in der Regel schnell abbaut.

Die Auswahl des sicheren Zustands kann von verschiedenen Faktoren abhängen:
- von der Art des Elektromotors (z.B. ASM, PSM, FSM, ...)
- vom aktuellen Arbeitspunkt des Elektromotors (z.B. Drehzahl, EMK, Batteriespannung, ...)
- von Fehlern im Antriebssystem oder dessen Umgebung.

Beiden sicheren Zuständen ist gemein, dass es beim Wechsel in den jeweiligen sicheren Zustand zu unerwünschten Effekten kommen kann.

Beim Wechsel in den sicheren Zustand "aktiver Kurzschluss" können transiente Phasenströme auftreten, die bei üblicher Auslegung des Pulswechselrichters dessen maximale Stromtragfähigkeit deutlich überschreiten können.

Beim Wechsel in den sicheren Zustand "Freilauf" werden die Phasenströme unverzögert in den Spannungszwischenkreis kommutiert, wodurch es im Spannungszwischenkreis zu einem unerwünschten plötzlichen Anstieg der Spannung kommen kann.

Hierzu sind verschiedene Ansätze vorgestellt worden, um diese Probleme zu reduzieren.

Die DE 10 2013 226 560 A1 offenbart ein Verfahren für einen verbesserten Wechsel von einem Freilaufbetrieb in einen aktiven Kurzschluss einer elektrischen Maschine. Dabei wird der Wechsel von dem Freilauf in den aktiven elektrischen Kurzschluss solange verzögert, bis eine elektrische Spannung an den Anschlüssen der elektrischen Maschine einen vorbestimmten Wert aufweist. Auf diese Weise wird erreicht, dass das Umschalten in Abhängigkeit einer durch die bestimmte Spannung ermittelten Rotorlage erfolgen kann.

Aus der DE 10 2021 129 144 A1 ist ein Verfahren zum Betreiben einer elektrischen Schaltungsanordnung, umfassend eine elektrische Schaltung und eine elektrische Maschine, bekannt, wobei bei Erfüllung wenigstens eines Auslösekriteriums die elektrische Maschine über die elektrische Schaltung in einen Freilauf geschaltet wird, wonach in Abhängigkeit wenigstens eines eine Statorstromänderung in der elektrischen Maschine beschreibenden Messwertes für die Zeitdauer im Freilauf betrieben wird und anschließend über die elektrische Schaltung in einen aktiven Kurzschluss geschaltet wird.

Das Schalten der Leistungsendstufe stellt jedoch ein Zielkonflikt hinsichtlich des Erreichens eines sicheren Zustandes dar. Solange die Leistungsendstufe schaltet, befindet sich der Wechselrichter nicht in einem der o.g. sicheren Zustände. Aus diesem Grund wird im praktischen Einsatz das Schalten der Leistungsendstufe von einer Überwachungsebene unterbunden, wenn diese einen sicherheitsrelevanten Fehler erkennt. D.h. dass gemäß des heutigen Stands der Technik die gezielte bzw. geregelte Überführung des Antriebs in einen sicheren Zustand nicht erfolgen kann, wenn eine Überwachungsebene einen sicherheitsrelevanten Fehler erkennt. Vielmehr erfolgt die Abschaltung unmittelbar mittels einer redundanten Abschalteinrichtung, sodass die Leistungstransistoren für die dort maximal auftretbaren Ströme ausgelegt werden müssen. Die redundante Abschalteinrichtung kann in Hardware oder Software ausgebildet sein. Vorzugsweise ist die Abschalteinrichtung eine Kombination aus Hard- und Software.

Der Erfindung liegt das technische Problem zugrunde, eine Schaltungsanordnung zur Ansteuerung eines Wechselrichters in einen Hochvoltnetz zu schaffen, mittels derer der Abschaltvorgang verbessert ist. Ein weiteres technisches Problem ist es, ein geeignetes Verfahren zur Ansteuerung zur Verfügung zu stellen.

Die Lösung des technischen Problems ergibt sich durch eine Schaltungsanordnung mit den Merkmalen des Anspruchs 1 sowie ein Verfahren mit den Merkmalen des Anspruchs 6. Weitere vorteilhafte Ausgestaltungen der Erfindung ergeben sich aus den Unteransprüchen.

Die Schaltungsanordnung zur Ansteuerung eines Wechselrichters in einem Hochvoltnetz, wobei der Wechselrichter mit einer Elektromaschine und einer Hochvoltbatterie verbunden ist, weist mindestens einen Mikrocontroller, mindestens eine Überwachungsschaltung für den Mikrocontroller, mindestens einen Gate-Treiberbaustein für den Wechselrichter und eine redundante Abschalteinrichtung zur Durchführung eines Abschaltvorganges des Wechselrichters auf. Die Überwachungsschaltung bildet dabei die Überwachungsebene. Der Mikrocontroller, der Gate-Treiberbaustein und der Wechselrichter selbst bilden die Funktionale Ebene. Die Überwachungsschaltung ist derart ausgebildet, mindestens Zustandsdaten des mindestens einen Gate-Treiberbausteins und des Wechselrichters zu empfangen. Weiter ist die Überwachungsschaltung derart ausgebildet, im Fehlerfall (sicherheitsrelevanter Fehler), in dem die Elektromaschine in einen sicheren Zustand überführt werden muss (Freilauf oder aktiver Kurzschluss), die Verfügbarkeit des Mikrocontrollers, des mindestens einen Gate-Treiberbausteins und des Wechselrichters zu prüfen, ob ein gesteuertes oder geregeltes Überführen der Elektromaschine über den Mikroprozessor möglich ist. Wenn dies nicht möglich ist (z.B. Mikroprozessor oder Gate-Treiberbaustein sind defekt), wird der Abschaltvorgang über die redundante Abschalteinrichtung durchgeführt. Ansonsten wird der Abschaltvorgang durch den Mikrocontroller eingeleitet, wobei die Überwachungsschaltung weiter derart ausgebildet ist, den Abschaltvorgang durch den Mikrocontroller zu überwachen und bei Auftreten eines Fehlers die Abschaltung über die redundante Abschalteinrichtung vorzunehmen. Abschaltvorgang bedeutet dabei das Überführen in einen sicheren Zustand, sodass am Ende des Abschaltvorgangs der Wechselrichter im Freilauf oder im aktiven Kurzschluss ist. Hierdurch kann erheblich häufiger im Fehlerfall gesteuert oder geregelt ausgeschaltet werden, sodass die auftretenden Ströme reduziert werden, was die Leistungstransistoren des Wechselrichters weniger stark belastet. Durch die Überwachung des Abschaltvorganges wird die Sicherheit weiter gewährleistet. Der Wechselrichter ist dabei vorzugsweise ein Pulswechselrichter. Weiter vorzugsweise kommt die Schaltungsanordnung in einem Traktionsnetz eines Kraftfahrzeugs zur Anwendung.

In einer Ausführungsform ist die Überwachungsschaltung derart ausgebildet, dass, wenn die Elektromaschine nicht innerhalb einer vorgegebenen Zeit in einen sicheren Zustand bei Abschaltung über den Mikrocontroller ist, die redundante Abschalteinrichtung angesteuert wird, um den Wechselrichter abzuschalten. Die vorgegebene Zeit kann dabei fest sein oder aber adaptiv in Abhängigkeit der Parameter (z.B. Spannung) angepasst werden.

In einer weiteren Ausführungsform ist die Überwachungsschaltung derart ausgebildet, dass bei einer Abweichung des Abschaltvorganges durch den Mikroprozessor von einem vorgegebenen Abschaltvorgang die Überwachungsschaltung die redundante Abschalteinrichtung ansteuert, um den Wechselrichter abzuschalten. Hierdurch können insbesondere Software-Defekte im Mikrocontroller und/oder im Gate-Treiberbaustein entdeckt werden, aufgrund derer der Wechselrichter beispielsweise in einen Freilauf statt eines aktiven Kurzschlusses geschaltet wird.

In einer weiteren Ausführungsform sind die mindestens eine Überwachungsschaltung und der Mikrocontroller in einem Multi-Core-Prozessor integriert. Dabei kann vorgesehen sein, dass nur Teile der Überwachungsschaltung in dem Core integriert sind, wobei andere Teile (z.B. ein Watch-Dog) der Überwachungsschaltung außerhalb des Multi-Core-Prozessors angeordnet sind.

In einer weiteren Ausführungsform ist die Überwachungsschaltung derart ausgebildet, bei einem Fehler im Abschaltvorgang durch den Mikrocontroller den Mikrocontroller abzuschalten, um so die sichere Abschaltung durch die redundante Abschalteinrichtung nicht durch den Mikrocontroller zu stören.

Hinsichtlich der verfahrensmäßigen Ausgestaltung wird vollinhaltlich auf die vorangegangenen Ausführungen Bezug genommen.

Die Erfindung wird nachfolgend anhand eines bevorzugten Ausführungsbeispiels näher erläutert. Die einzige Figur zeigt ein schematisches Blockschaltbild eines Traktionsnetzes eines Kraftfahrzeugs.

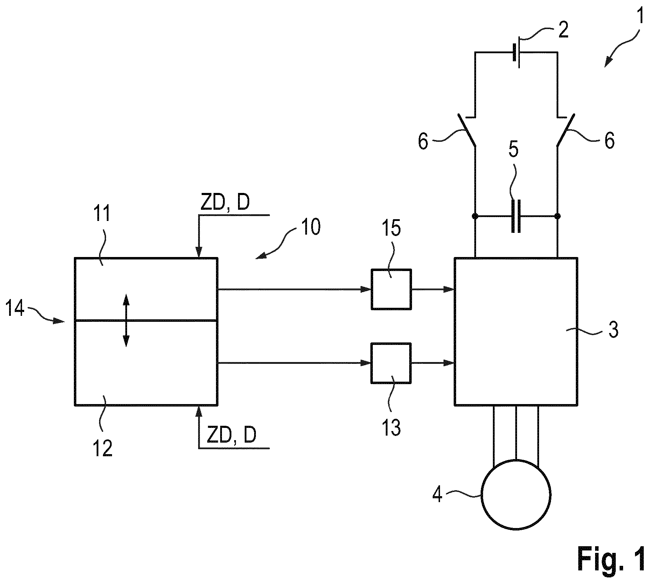

In der Fig. 1 ist schematisch ein Blockschaltbild eines Traktionsnetzes 1 eines Kraftfahrzeugs dargestellt, das eine Hochvoltbatterie 2, einen Wechselrichter 3 und eine Elektromaschine 4 aufweist. Der Wechselrichter 3 ist vorzugsweise als Pulswechselrichter ausgebildet. Am Gleichspannungseingang des Wechselrichters 3 ist ein Zwischenkreiskondensator 5 angeordnet. Über Schütze 6 ist die Hochvoltbatterie 2 vom Wechselrichter 3 trennbar. Weiter weist das Traktionsnetz 1 eine Schaltungsanordnung 10 auf, die mindestens eine Überwachungsschaltung 11, mindestens einen Mikrocontroller 12 und mindestens einen Gate-Treiberbaustein 13 aufweist. Die Überwachungsschaltung 11 und der Mikrocontroller 12 sind gemeinsam in einem Multi-Core-Mikroprozessor 14 integriert und tauschen Daten aus, wobei die Überwachungsschaltung den Mikrocontroller 12 auf Soft- und Hardware-Fehler überwacht. Dabei können weitere Teile der Überwachungsschaltung 11 als separate Hard- und/oder Software außerhalb des Multi-Core-Prozessors 14 vorgesehen sein. Die Überwachungsschaltung 11 erhält zusätzlich Zustandsdaten ZD des mindestens einen Gate-Treiberbausteins 13 und des Wechselrichters 3. Diese Zustandsdaten ZD kann auch der Mikrocontroller 12 empfangen. Des Weiteren erhalten die Überwachungsschaltung 11 und der Mikrocontroller 12 Betriebsdaten D vom Traktionsnetz 1 wie beispielsweise Strom- und Spannungswerte. Schließlich weist die Schaltungsanordnung 10 noch eine redundante Abschalteinrichtung 15 auf, mittels derer der Wechselrichter 3 abgeschaltet werden kann, um die Elektromaschine 4 in einen sicheren Zustand zu bringen. Dabei können auch mehrere redundante Abschalteinrichtungen 15 vorgesehen sein. Beispielsweise ist die redundante Abschalteinrichtung 15 derart ausgebildet, für eine feste vorgegebene Zeit den Wechselrichter in einen Freilauf zu schalten und anschließend in einen aktiven Kurzschluss. Die redundante Abschalteinrichtung 15 ist vorzugsweise eine kombinierte Hard- und Software-Lösung.

Im normalen Betrieb steuert der Mikrocontroller 12 den mindestens einen Gate-Treiberbaustein 13 an, der dann die Leistungstransistoren (MOSFETs oder IGBTs) im Wechselrichter 3 ansteuert.

Erfasst nun die Überwachungsschaltung 11 einen Fehler, der es erfordert, dass die Elektromaschine 4 in einen sicheren Zustand überführt werden muss, so überprüft die Überwachungsschaltung 11 zunächst die Verfügbarkeit von Mikrocontroller 12, Gate-Treiberbaustein 13 und der Leistungstransistoren im Wechselrichter 3. Ist die Verfügbarkeit nicht gegeben, so steuert die Überwachungsschaltung 11 die redundante Abschalteinrichtung 15 an, die dann den Wechselrichter 3 abschaltet, also in den Freilauf und/oder den aktiven Kurzschluss schaltet. Ist hingegen die Verfügbarkeit gegeben, so wird der Abschaltvorgang des Wechselrichters 3 durch den Mikrocontroller 12 gesteuert (oder geregelt), wobei dann gegebenenfalls in Abhängigkeit der Daten D eine Freilaufzeit ermittelt und eingestellt wird, um dann anschließend in den aktiven Kurzschluss zu schalten. Dieses gesteuerte Abschalten des Wechselrichters 3 durch den Mikrocontroller 12 wird von der Überwachungsschaltung 11 überwacht. Erfolgt der Abschaltvorgang dabei nicht innerhalb einer vorgegebenen Zeit oder weicht der Abschaltvorgang des Mikrocontrollers 12 von einem vorgegebenen Abschaltvorgang ab, so wird der Mikrocontroller 12 abgeschaltet und die Überwachungsschaltung 11 steuert die redundante Abschalteinrichtung 15 an, die dann den Wechselrichter 3 ausschaltet. Die Überwachungsschaltung 11 stellt dabei auch sicher, dass die Elektromaschine 4 solange wie notwendig im sicheren Zustand verbleibt. Dabei sei angemerkt, dass im Fehlerfall die Schütze 6 oder alternative Trennelemente geöffnet werden können.

### Bezugszeichenliste

- 1: Traktionsnetz
- 2: Hochvoltbatterie
- 3: Wechselrichter
- 4: Elektromaschine
- 5: Zwischenkreiskondensator
- 6: Schütz
- 10: Schaltungsanordnung
- 11: Überwachungsschaltung
- 12: Mikrocontroller
- 13: Gate-Treiberbaustein
- 14: Multi-Core-Mikroprozessor
- 15: redundante Abschalteinrichtung

## Patentansprüche

1. Schaltungsanordnung (10) zur Ansteuerung eines Wechselrichters (3) in einem Hochvoltnetz, wobei der Wechselrichter (3) mit einer Elektromaschine (4) und einer Hochvoltbatterie (2) verbunden ist, wobei die Schaltungsanordnung (10) mindestens einen Mikrocontroller (12), mindestens eine Überwachungsschaltung (11) für den Mikrocontroller (12), mindestens einen Gate-Treiberbaustein (13) für den Wechselrichter (3) und eine redundante Abschalteinrichtung (15) zur Durchführung eines Abschaltvorganges des Wechselrichters (3) aufweist, wobei die Überwachungsschaltung (11) derart ausgebildet ist, mindestens Zustandsdaten (ZD) des mindestens einen Gate-Treiberbausteins (13) und des Wechselrichters (3) zu empfangen, wobei die Überwachungsschaltung (11) derart ausgebildet ist, im Fehlerfall, in dem die Elektromaschine (4) in einen sicheren Zustand überführt werden muss, die Verfügbarkeit des Mikrocontrollers (12), des mindestens einen Gate-Treiberbausteins (13) und des Wechselrichters (3) zu prüfen, ob ein gesteuertes oder geregeltes Überführen der Elektromaschine (4) über den Mikrocontroller (12) möglich ist, wobei, wenn dies nicht möglich ist, der Abschaltvorgang über die redundante Abschalteinrichtung (15) durchgeführt wird und ansonsten der Abschaltvorgang durch den Mikrocontroller (12) eingeleitet wird, wobei die Überwachungsschaltung (11) weiter derart ausgebildet ist, den Abschaltvorgang durch den Mikrocontroller (12) zu überwachen und bei Auftreten eines Fehlers die Abschaltung über die redundante Abschalteinrichtung (15) vorzunehmen.

2. Schaltungsanordnung nach Anspruch 1, **dadurch gekennzeichnet, dass** die Überwachungsschaltung (11) derart ausgebildet ist, dass, wenn die Elektromaschine (4) nicht innerhalb einer vorgegebenen Zeit in einem sicheren Zustand bei Abschaltung über den Mikrocontroller (12) ist, die redundante Abschalteinrichtung (15) angesteuert wird, um den Wechselrichter (3) abzuschalten.

3. Schaltungsanordnung nach Anspruch 1 oder 2, **dadurch gekennzeichnet, dass** die Überwachungsschaltung (11) derart ausgebildet ist, dass bei einer Abweichung des Abschaltvorgangs durch den Mikrocontroller (12) von einem vorgegebenen Abschaltvorgang die Überwachungsschaltung (11) die redundante Abschalteinrichtung (15) ansteuert, um den Wechselrichter (3) abzuschalten.

4. Schaltungsanordnung nach einem der vorangegangenen Ansprüche, **dadurch gekennzeichnet, dass** mindestens ein Teil der mindestens einen Überwachungsschaltung (11) und der Mikrocontroller (12) in einem Multi-Core-Prozessor (14) integriert sind.

5. Schaltungsanordnung nach einem der vorangegangenen Ansprüche, **dadurch gekennzeichnet, dass** die Überwachungsschaltung (11) derart ausgebildet ist, bei einem Fehler im Abschaltvorgang durch den Mikrocontroller (12) den Mikrocontroller (12) abzuschalten.

6. Verfahren zur Ansteuerung eines Wechselrichters (3) in einem Hochvoltnetz, wobei der Wechselrichter (3) mit einer Elektromaschine (4) und einer Hochvoltbatterie (2) verbunden ist, mittels einer Schaltungsanordnung (10), wobei die Schaltungsanordnung (10) mindestens einen Mikrocontroller (12), mindestens eine Überwachungsschaltung (11) für den Mikrocontroller (12), mindestens einen Gate-Treiberbaustein (13), für den Wechselrichter (3) und eine redundante Abschalteinrichtung (15) zur Durchführung eines Abschaltvorganges des Wechselrichters (3), um die Elektromaschine (4) in einen sicheren Zustand zu schalten, wobei die Überwachungsschaltung (11) mindestens Zustandsdaten (ZD) des mindestens einen Gate-Treiberbausteins (13) und des Wechselrichters (3) empfängt, wobei die Überwachungsschaltung (11) im Fehlerfall, in dem die Elektromaschine (4) in einen sicheren Zustand überführt werden muss, die Verfügbarkeit des Mikrocontrollers (12), des mindestens einen Gate-Treiberbausteins (13) und des Wechselrichters (3) geprüft wird, ob ein eingesteuertes oder geregeltes Überführen der Elektromaschine (4) über den Mikroprozessor (12) möglich ist, wobei, wenn dies nicht möglich ist, der Abschaltvorgang über die redundante Abschalteinrichtung (15) durchgeführt wird und ansonsten der Abschaltvorgang durch den Mikrocontroller (12) eingeleitet wird, wobei die Überwachungsschaltung (11) den Abschaltvorgang durch den Mikrocontroller (12) überwacht und bei Auftreten eines Fehlers die Abschaltung über die redundante Abschalteinrichtung (15) vornimmt.

7. Verfahren nach Anspruch 6, **dadurch gekennzeichnet, dass**, wenn die Elektromaschine (4) nicht innerhalb einer vorgegebenen Zeit in einem sicheren Zustand bei Abschaltung über den Mikrocontroller (12) ist, die Überwachungsschaltung (11) die redundante Abschalteinrichtung (15) ansteuert, um den Wechselrichter (3) abzuschalten.

8. Verfahren nach Anspruch 6 oder 7, **dadurch gekennzeichnet, dass** die Überwachungsschaltung (11) bei einer Abweichung des Abschaltvorganges durch den Mikrocontroller (12) von einem vorgegebenen Abschaltvorgang die redundante Abschalteinrichtung (15) ansteuert, um den Wechselrichter (3) abzuschalten.

9. Verfahren nach einem der Ansprüche 6 bis 8, **dadurch gekennzeichnet, dass** mindestens ein Teil der mindestens einen Überwachungsschaltung (11) und der Mikrocontroller (12) in einem Multi-Core-Prozessor (14) integriert sind.

10. Verfahren nach einem der Ansprüche 6 bis 9, **dadurch gekennzeichnet, dass** die Überwachungsschaltung (11) bei einem Fehler im Abschaltvorgang durch den Mikrocontroller (12) den Mikrocontroller (12) abschaltet.
